# EUROPÄISCHE PATENTSCHRIFT

(11) **EP 2 466 409 B1**
(45) Veröffentlichungstag und Bekanntmachung des Hinweises auf die Patenterteilung: **19.03.2014**
(21) Anmeldenummer: 10195237.2
(22) Anmeldetag: 15.12.2010
(51) Int. Cl.: G05D 1/02

(54) **Verfahren und Vorrichtung zum automatisierten Steuern eines Transportsystems**
Method and device for automatically controlling a transport system
Procédé et dispositif destinés à la commande automatique d'un système de transport

(43) Veröffentlichungstag der Anmeldung: 20.06.2012
(73) Patentinhaber: MT Robot AG, 4222 Zwingen (CH)
(72) Erfinder: Drost, Andreas, 4125, Riehen (CH)
(74) Vertreter: Braun, André jr.

(56) Entgegenhaltungen:
- EP-A2- 0 358 628
- WO-A2-2008/060689
- US-A- 4 986 384
- US-B1- 7 069 124

## Beschreibung

Die Erfindung betrifft eine Vorrichtung zum automatisierten Steuern eines Transportsystems gemäss dem Oberbegriff des unabhängigen Patentanspruchs 1 sowie ein entsprechendes Verfahren.

### Beschreibung

Aus dem Stand der Technik sind Steuervorrichtungen und entsprechende Verfahren für selbstfahrende Transportsysteme bekannt, welche Oberflächen von beweglichen oder unbeweglichen Objekten, insbesondere des Fahrgrundes oder Personen in Fahrtrichtung des Transportsystems, erfassen und verarbeiten.

So wird in der Patentschrift EP 0290633 B1 ein Verfahren zum Erkennen von Änderungen im Fahrraum eines unbemannten Fahrzeugs offenbart. Hierbei wird mittels eines berührungslosen Aufnehmers sowie einer Verarbeitung der Messwerte für die Steuerung des Fahrzeugs aus mindestens einer von mindestens zwei beabstandeten Öffnungen am Fahrzeug eine Rasterprojektion in Fahrtrichtung auf die Fahrbahn abgestrahlt und von mindestens einer anderen Öffnung von der Rasterprojektion und von dem vor dem Fahrzeug befindlichen Raum Bildfolgen aufgenommen, wobei die Rasteränderungen nach Verarbeitung in Echtzeit eine Steuerung des unbemannten Fahrzeugs veranlassen.

Einer der Nachteile dieses Verfahrens sowie der entsprechenden Vorrichtung besteht darin, dass ein optisch wahrnehmbares räumliches Raster in den Raum vor dem Fahrzeug ausgesendet und mittels einer Videokamera erfasst werden muss. Die Auswertung der erfassten Bilddaten in Echtzeit hat sich als sehr rechenintensiv und daher nachteilig erwiesen. Daher ist die zu wählende Auflösung der Rasterung der erfassbaren Objekte derart zu wählen, dass die Auswertung schnell genug erfolgen kann. Ein anderer Nachteil besteht darin, dass die Rasterung wie vorgeschlagen durch einen mit der Videokamera synchronisierten Xenon Blitz erfolgt, so dass bestimmte Einsatzgebiete des Verfahrens, wie etwa in Reinräumen, ausgenommen sind.

Das Dokument DE 10196988 T5 offenbart ein mobiles Robotersystem zur Ausführung einer Vielzahl von separaten Tätigkeiten, wie etwa dem Andocken von Betriebsmodulen, das wenigstens einen autonomen mobilen Roboter mit Rädern mit wenigstens einem Radantriebsmotor aufweist; einen eingebauten Computer; Mittel zur Navigation, Ausrichtung und Manövrierung in einer Umgebung mit beweglichen Hindernissen; ein Sensorsystem und ein drahtloses Kommunikationssystem zum Empfangen und Senden von Signalen enthält. Insbesondere umfasst das Robotersystem Mittel zur Überwachung entlang der Seiten des autonomen mobilen Roboters unter Verwendung eines Paars von Kameras oder eines Paars von Infrarotsensoren, wobei damit beabsichtig ist, dem Roboter zu ermöglichen bzw. sie zu aktivieren, Kollisionen mit Wänden und irgendwelchen Gegenständen zu vermeiden, die einer der Seiten des Roboters nahe kommen könnten.

Das Dokument EP 358628 zeigt ein Objekterfassungsgerät mit mehreren Lichtprojektoren die an einer Vorderseite des Geräts angeordnet sind und mittels einer Optik licht in Streifenform abstrahlen, welches von einer CCD Kamera erfasst wird. Aus den Bilddaten wird ein Steuersignal für das Gerät gewonnen.

Das Dokument Us 4 986 384 beschreibt ein Fernsteuerungssystem für mobile Objekte, das zur Steuerung des Objekts Radiowellen verwendet, die von Sende- und Empfangseinheiten verarbeitet werden.

Einer der Nachteile dieser Vorrichtung besteht darin, dass die beiden seitlich angeordneten Infrarotabstandsmesssensoren oder Kameras einen eingeschränkten Sektor erfassen und somit in Fahrtrichtung vorhandene Hindernisse übersehen werden. Zudem ist die Anordnung sperrig und schränkt die Bewegungsfreiheit des Systems ein.

Es ist daher Aufgabe der vorliegenden Erfindung, eine Vorrichtung und ein Verfahren zum automatisierten Steuern eines selbstfahrenden Transportsystems bereitzustellen, welches die Nachteile des Stands der Technik nicht aufweist, insbesondere eine von der zu befahrenden Umgebung unabhängig funktionierende Steuerung ermöglicht. Zudem ist es eine Aufgabe der Erfindung, sowohl bewegliche wie unbewegliche Objekte zwecks Steuerung des Fahrzeugs zuverlässig und sicher erkennen zu können.

Insbesondere wird die Aufgabe der Erfindung gelöst durch eine Vorrichtung sowie ein Verfahren zum automatisierten Steuern eines Transportsystems, wobei mittels einer Messvorrichtung des Transportsystems Abstandsmesswerte bezüglich des Abstands zwischen der Messvorrichtung und einer zu befahrenden Oberfläche erfasst werden und ein basierend auf den erfassten Abstandsmesswerten generiertes Steuersignal an die Steuervorrichtung übertragen wird, wobei mittels der Messvorrichtung in einem lokalen Messbereich der Messvorrichtung erfasste Abstandsmesswerte selektiv mit einem Abstandsgrenzwert verglichen werden, wobei bei Überschreiten desselben ein entsprechendes Steuersignal zur Steuerung der Transportvorrichtung generiert wird.

Einer der Vorteile der Erfindung besteht darin, dass das erfindungsgemässe Transportsystem in der Lage ist, automatisiert einen Abgrund oder eine nicht befahrbare Oberfläche zu erkennen und basierend auf dem Steuersignal anzuhalten oder entsprechende Lenkmanöver zu tätigen. Insbesondere ist vorteilhaft, dass nicht nur bewegliche und unerwartete Objekte in einer Fahrtrichtung erfassbar sind, sonder auch, dass nicht bekannte Vertiefungen oder Erhebungen des Fahruntergrunds rechtzeitig erkannt werden. Diesfalls wird das selbstfahrende Fahrzeug gestoppt oder verlangsamt und ein Ausweichmanöver gefahren, um etwa einen Absturz zu verhindern.

Vorteilhafte Ausgestaltungen des erfindungsgemässen Transportsystems sind den abhängigen Ansprüchen zu entnehmen.

In einer bevorzugten Ausgestaltung der Erfindung ist vorgesehen, dass das Transportsystem in ihrer Beschleunigung veränderbare sowie lenkbare und/oder steuerbare Räder umfasst, welche mittels der Steuervorrichtung automatisiert steuerbar sind und dass die Messvorrichtung mehrere Messmodule zum Erfassen von Abstandsmesswerten eines jeweils entsprechenden lokalen Messbereichs umfasst, wobei die Messmodule bezüglich den Rädern des Transportsystems derart horizontal beabstandet sind, dass anhand der Abstandsmesswerte von zu den Rädern benachbarten Vertiefungen und/oder Erhöhungen der Oberfläche ein entsprechendes Steuersignal generierbar ist.

Das erfindungsgemässe Transportsystem eignet sich daher für den sicheren automatisierten Transport vor Gefahr- oder Sondergut etwa in Spitälern, Laboratorien, Lagerhäusern und dergleichen, sowie zum Betrieb von Dienstleistungsgeräten, wie Reinigungssystemen etc., wobei das Transportsystem eventuelle Abgründe oder steile Rampen sicher umgeht oder rechtzeitig stoppt.

Die Erfindung soll nachstehend anhand der schematischen Zeichnung näher erläutert werden. Es zeigen:
Fig. 1 ein schematisch dargestelltes erfindungsgemässes Transportsystem mit zwei Antriebs- und zwei nachführbaren Lenkrädern, wobei das Transportsystem auf einer zu befahrenden Oberfläche vor Erreichen eines Abgrunds rechtzeitig angehalten wird;
Fig. 2 ein schematisch dargestelltes erfindungsgemässes Transportsystem mit einer anderen Ausführung, wobei das Transportsystem ebenfalls vor einem Abgrund rechtzeitig angehalten wird;
Fig. 3a zeigt in einer schematischen Darstellung ein erfindungsgemässes Transportsystem auf einer zu befahrenden Oberfläche, wobei diese verschiedene Vertiefungen, Erhebungen und Rampen aufweist;
Fig. 3b zeigt in einem schematischen Diagramm die mittels der Messvorrichtung des erfindungsgemässen Transportsystems in Fig. 3a erfassten Abstandsmesswerte der gesamten zu befahrenden Oberfläche auf einer Horizontalachse;
Fig. 4, 5 und 6 zeigen jeweils eine in gestrichelter Kreislinie bezeichnete Detailansicht aus Fig. 3b, wobei zwischen zulässigen und nicht zulässigen Messwertebereichen unterschieden werden kann, basierend auf welchen entsprechende Steuersignale mittels der Messvorrichtung erzeugbar sind, um das Transportsystem entsprechend der Beschaffenheit der Oberfläche zu steuern, und
Fig. 7 zeigt ein schematisches Blockschaltbild des erfindungsgemässen Transportsystems.

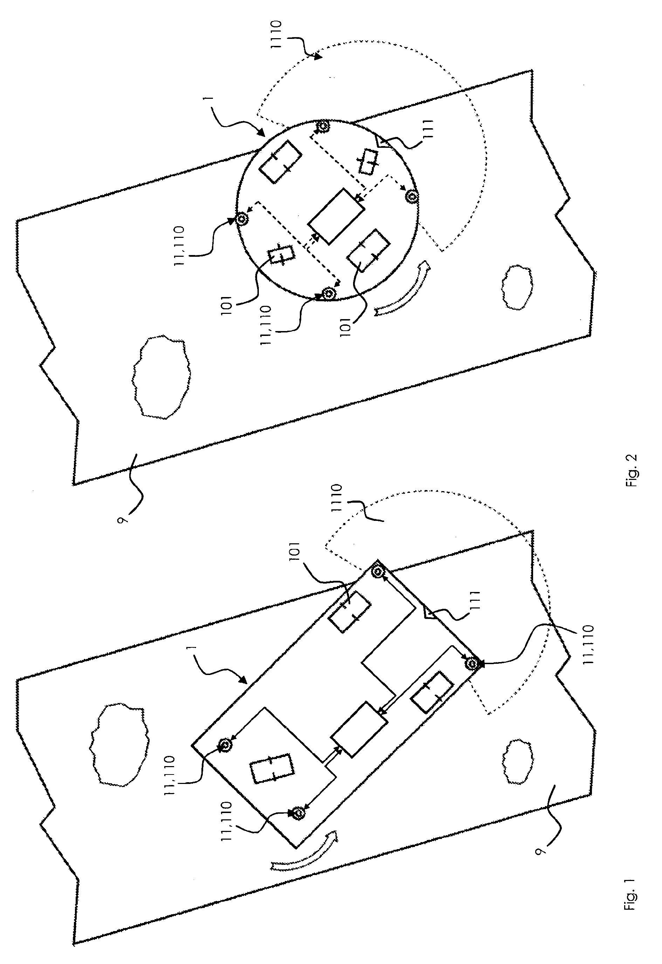

Figur 1 und Figur 2 illustrieren jeweils ein schematisch dargestelltes erfindungsgemässes Transportsystem mit zwei Antriebs- und zwei nachführbaren Lenkrädern, wobei das Transportsystem auf einer zu befahrenden Oberfläche vor Erreichen eines Abgrunds rechtzeitig angehalten wird. Die Lenkräder können auch als Nachlaufrollen ausgebildet sein. Das Transportsystem, hier mit Bezugszeichen 1 bezeichnet, umfasst eine automatisierte Steuervorrichtung sowie eine Messvorrichtung 11 zum Erfassen von Abstandsmesswerten hinsichtlich des Abstands zwischen der Messvorrichtung 11 und einer zu befahrenden Oberfläche 9 und zum Übertragen eines basierend auf den erfassten Abstandsmesswerten generierbaren Steuersignals an die Steuervorrichtung, wobei die Messvorrichtung 11 ausgebildet ist, in einem lokalen Messbereich der Messvorrichtung 11 erfasste Abstandsmesswerte selektiv mit einem Abstandsgrenzwert zu vergleichen und um bei Überschreiten desselben ein entsprechendes Steuersignal zur Steuerung der Transportvorrichtung 1 zu generieren.

Das Transportsystem 1 umfasst in ihrer Beschleunigung veränderbare sowie lenkbare und/oder steuerbare Räder 101, welche mittels der Steuervorrichtung automatisiert steuerbar sind.

Die Messvorrichtung 11 umfasst mehrere Messmodule 110 zum Erfassen von Abstandsmesswerten eines jeweils entsprechenden lokalen Messbereichs, wobei die Messmodule 110 bezüglich der Räder 101 des Transportsystems 1 derart horizontal beabstandet sind, dass anhand der Abstandsmesswerte von zu den Rädern benachbarten Vertiefungen und/oder Erhöhungen der Oberfläche ein entsprechendes Steuersignal generierbar ist. Die Abstandsmesswerte werden durch die erfindungsgemässe Messvorrichtung 11 auch bei teilweise nasser oder bei dunkler Oberfläche zuverlässig erfasst.

Die Messmodule 110 sind vorzugsweise so angeordnet, dass sie zu den Rädern 101 einen Minimalabstand aufweisen, so dass genügend Reaktionszeit bei einer bestimmten Geschwindigkeit des Transportsystems vorhanden ist, um ein Steuersignal basierend auf den erfassten Abstandsmesswerten zu generieren und der Steuervorrichtung zu übertragen. Die Messmodule sind bspw. auf der Unterseite des Transportsystems angeordnet bzw. sind in der Lage, aus einer Öffnung der Unterseite heraus eine Abstandsmessung durchzuführen. Die Messmodule 110 können auch auf einem Sockel des Transportsystems in einem bestimmten Winkel angeordnet sein, so dass der lokale Messbereich vor den Rädern zu liegen kommt.

Die Messvorrichtung 11 weist vorzugsweise auch mindestens ein Distanzmessmodul 111 zum Erfassen von Distanzmesswerten eines zur Oberfläche 9 beabstandeten horizontalen Distanzmessbereichs 1110 auf, basierend auf welchen Distanzmesswerten ein entsprechendes Steuersignal generierbar ist. So können auch Sicherheitsstopps des Transportsystems durchgeführt werden, selbst, wenn kein Abgrund erfasst worden ist.

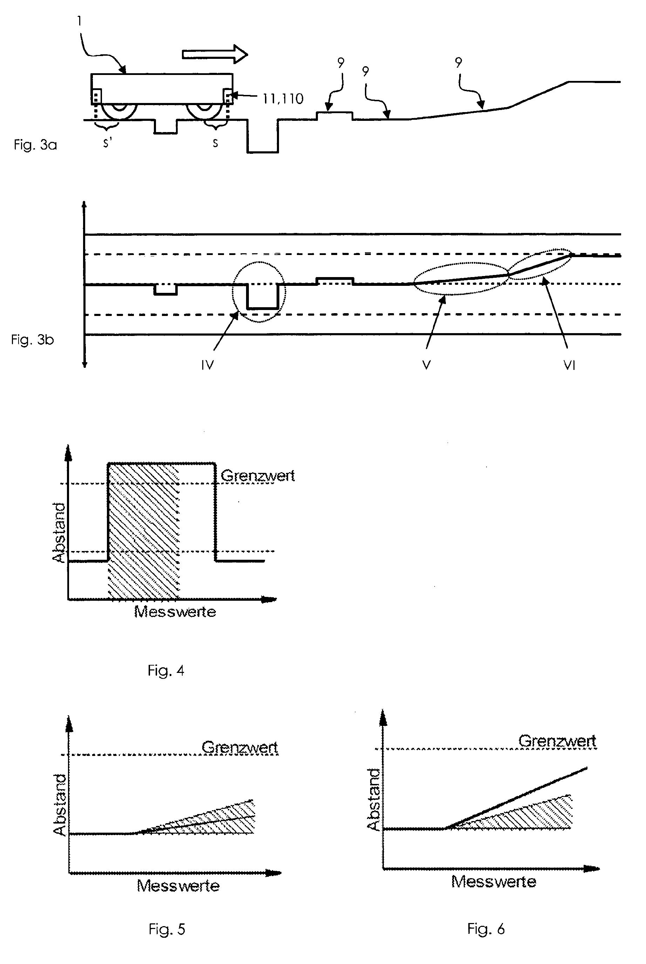

Figur 3a illustriert in einer schematischen Darstellung ein erfindungsgemässes Transportsystem 1 auf einer zu befahrenden Oberfläche 9, wobei diese verschiedene Vertiefungen, Erhebungen und Rampen aufweist;

Figur 3b illustriert in einem schematischen Diagramm die mittels der Messvorrichtung 11 des erfindungsgemässen Transportsystems 1 in Fig. 3a erfassten Abstandsmesswerte der gesamten zu befahrenden Oberfläche 9 auf einer Horizontalachse;

Figuren 4, 5 und 6 zeigen jeweils eine in gestrichelter Kreislinie bezeichnete Detailansicht aus Figur 3b, wobei zwischen zulässigen und nicht zulässigen Messwertebereichen unterschieden werden kann, basierend auf welchen entsprechende Steuersignale mittels der Messvorrichtung 11 erzeugbar sind, um das Transportsystem 1 entsprechend der Beschaffenheit der Oberfläche 9 zu steuern.

Figur 4 illustriert eine Vielzahl zeitlich nacheinander erfasster Abstandsmesswerte, welche ausserhalb eines konstanten Abstandsgrenzwerts liegen. Da die Messmodule horizontal zu den Rädern beabstandet sind, kann ein solcher Abgrund erkannt und rechtzeitig ein entsprechendes Steuersignal generiert und das Transportsystem 1 angehalten werden, um einen Absturz zu verhindern. Dabei ist der lokale Messbereich der zu messenden Oberfläche 9 durch eine Strecke oder Abstand zwischen einem Lenk- oder Antriebsrad des Transportsystems 1 und dem zum entsprechenden Rad am weitesten beabstandete Messpunkt des Messbereichs derart gewählt, dass die zum Generieren des Steuersignals und Steuern des Transportsystems 1 erforderliche Zeit geringer ist als der Quotient der besagten Strecke und der Fahrgeschwindigkeit des Transportsystems 1. Optische Abstandssensoren, wie etwa Laserabstandssensoren, weisen einen im Wesentlichen punktuellen, also kleinflächigen Messbereich auf.

Figur 5 zeigt einen Abschnitt der zu befahrenden Oberfläche 9, wobei mittels der erfassten Abstandsmesswerte eine zu befahrende Rampe erkannt wird. Dies wird mittels eines Gewichtungsmoduls der Messvorrichtung 11 erreicht, wobei ein zulässiger Abstandsgrenzwertbereich bzw. Referenzwert aus einer Lookup-Table ausgelesen wird und wobei ein neu erfasster Abstandsmesswert nur zum Generieren des Steuersignals herangezogen wird, falls er ausserhalb des Abstandsgrenzwertbereichs liegt, um ein Befahren der Rampen zu ermöglichen.

Figur 6 zeigt einen Abschnitt der zu befahrenden Oberfläche 9, bei welcher die ersichtliche Rampe zu steil ist, um vom Transportsystem 1 befahren zu werden. Es wird hier also ein zulässiger Steigungsbereich mit schraffierter Fläche illustriert, wobei die effektiv erfassten Abstandsmesswerte ausserhalb dieses zulässigen Bereichs liegen. Würde das erfindungsgemässe Transportsystem 1 diese Steigung befahren wollen, so würden Abstandsgrenzwerte überschritten und ein entsprechendes Steuersignal, bspw. Stoppsignal, generiert und das Transportsystem angehalten.

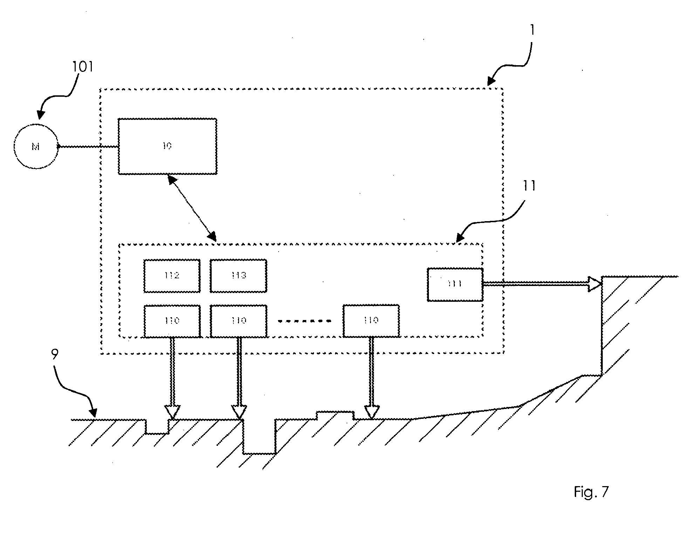

Figur 7 illustriert ein schematisches Blockschaltbild des erfindungsgemässen Transportsystems 1, wobei mittels mehreren Messmodulen 110 der Messvorrichtung 11 des Transportsystems jeweils entsprechende Abstandsmesswerte bezüglich der Oberfläche 9 erfasst werden. Basierend auf den erfassten Abstandsmesswerten wird der Antrieb, bspw. ein Elektromotor M eines Rads, gesteuert. Die Messvorrichtung 11 umfasst ein Fahrwegmessmodul 112 zum Erfassen einer zurückgelegten Fahrstrecke s, wobei die Messvorrichtung zudem eingerichtet ist, basierend auf dem Quotienten der Differenz aufeinanderfolgender Abstandsmesswerte und der erfassten Fahrstrecke ein entsprechendes Steuersignal zu generieren, derart, dass zulässige ansteigende und/oder abfallende Rampen detektierbar sind. Falls die detektierte ansteigende und/oder abfallende Rampe nach Vergleich mit einem Referenzwert unzulässig ist, wird mittels der Steuervorrichtung ein entsprechendes Steuersignal, bspw. Stoppsignal erzeugt. Mit Bezugszeichen 113 ist ein Gewichtungsmodul der oben beschriebenen Art bezeichnet.

### Bezugszeichenlegende

- 1: Transportsystem
- 10: Steuervorrichtung
- 101: Rad
- 11: Messvorrichtung
- 110: Messmodul
- 111: Distanzmessmodul
- 1110: horizontaler Distanzmessbereich
- 112: Fahrwegmessmodul
- 113: Gewichtungsmodul
- 9: Oberfläche
- s: Fahrstrecke

## Patentansprüche

1. Transportsystem (1) mit automatisierter Steuervorrichtung (10), mit einer Messvorrichtung (11) zum Erfassen von Abstandsmesswerten hinsichtlich des Abstands zwischen der Messvorrichtung (11) und einer zu befahrenden Oberfläche (9) und zum Übertragen eines basierend auf den erfassten Abstandsmesswerten generierbaren Steuersignals an die Steuervorrichtung (10) und mit in ihrer Beschleunigung veränderbaren sowie lenkbaren und/oder steuerbaren Rädern (101), welche mittels der Steuervorrichtung (10) automatisiert steuerbar sind, **dadurch gekennzeichnet,**
**dass** die Messvorrichtung (11) ausgebildet ist, in einem lokalen Messbereich der Messvorrichtung (11) erfasste Abstandsmesswerte selektiv mit einem Abstandsgrenzwert zu vergleichen und um bei Überschreiten desselben ein entsprechendes Steuersignal zur Steuerung der Transportvorrichtung (1) zu generieren, wobei die Messvorrichtung (11) mehrere Messmodule (110) zum Erfassen von Abstandsmesswerten eines jeweils entsprechenden lokalen Messbereichs umfasst, welche bezüglich der Räder (101) horizontal beabstandet und auf der Unterseite des Transportsystems angeordnet sind, bzw. aus einer Öffnung der Unterseite heraus eine Abstandsmessung durchzuführen.

2. Transportsystem (1) gemäss Anspruch 1, **dadurch gekennzeichnet**, anhand der Abstandsmesswerte von zu den Rädern benachbarten Vertiefungen und/oder Erhöhungen der Oberfläche ein entsprechendes Steuersignal generierbar ist.

3. Transportsystem (1) gemäss einem der Ansprüche 1 bis 2, **dadurch gekennzeichnet, dass** die Messvorrichtung (11) mindestens ein Distanzmessmodul (111) zum Erfassen von Distanzmesswerten eines zur Oberfläche (9) beabstandeten horizontalen Distanzmessbereichs (1110) umfasst, basierend auf welchen Distanzmesswerten ein entsprechendes Steuersignal generierbar ist.

4. Transportsystem (1) gemäss einem der Ansprüche 1 bis 3, **dadurch gekennzeichnet, dass** jedes der Messmodule (110) als Ultraschallsensor oder als optischer Abstandssensor, vorzugsweise Laserabstandssensor, ausgebildet ist, wobei das Transportsystem (1) vorzugsweise zwei Laserabstandssensoren sowie zwei Ultraschallsensoren umfasst.

5. Transportsystem (1) gemäss einem der Ansprüche 1 bis 4, **dadurch gekennzeichnet, dass** das Steuersignal zwecks Kollisionsvermeidung mit benachbarten Objekten oder zur Absturzvermeidung auf der Oberfläche (9) als Verzögerungssignal und/oder als Lenksignal ausgebildet ist, um das Transportsystem (1) mittels der Steuervorrichtung (10) automatisiert von einem Abgrund fern zu halten oder um von einem solchen weg zu lenken.

6. Transportsystem (1) gemäss einem der Ansprüche 1 bis 5, **dadurch gekennzeichnet, dass** die Messvorrichtung (11) Fahrwegmessmodul (112) zum Erfassen einer zurückgelegten Fahrstrecke s umfasst, wobei die Messvorrichtung zudem eingerichtet ist, basierend auf dem Quotienten der Differenz aufeinanderfolgender Abstandsmesswerte und der erfassten Fahrstrecke ein entsprechendes Steuersignal zu generieren, derart, dass zulässige ansteigende und/oder abfallende Rampen detektierbar sind.

7. Transportsystem (1) gemäss einem der Ansprüche 1 bis 6, **dadurch gekennzeichnet, dass** die Messvorrichtung (11) bezüglich der Oberfläche (9) am Transportsystem (1) in einem kalibrierten Normalabstand angeordnet ist.

8. Verfahren zum automatisierten Steuern eines Transportsystems (1), wobei mittels einer Messvorrichtung (11) des Transportsystems (1) Abstandsmesswerte bezüglich des Abstands zwischen der Messvorrichtung (11) und einer zu befahrenden Oberfläche (9) erfasst werden, wobei ein basierend auf den erfassten Abstandsmesswerten generiertes Steuersignal an die Steuervorrichtung (10) übertragen wird, **dadurch gekennzeichnet, dass** mittels Messmodulen (110) der Messvorrichtung (11) in einem jeweils entsprechenden lokalen Messbereich der Messmodule (110) eine Abstandsmessung von einer Unterseite des Transportsystems (1) durchgeführt wird und erfasste Abstandsmesswerte selektiv mit einem Abstandsgrenzwert verglichen werden, wobei bei Überschreiten desselben ein entsprechendes Steuersignal zur Steuerung der Transportvorrichtung (1) generiert wird.

9. Verfahren gemäss Anspruch 8, **dadurch gekennzeichnet, dass** der lokale Messbereich der zu messenden Oberfläche (9) durch eine Strecke zwischen einem Lenk- oder Antriebsrad des Transportsystems (1) und dem zum entsprechenden Rad am weitesten beabstandete Messpunkt des Messbereichs derart gewählt ist, dass die zum Generieren des Steuersignals und Steuern des Transportsystems (1) erforderliche Zeit geringer ist als der Quotient der besagten Strecke und der Fahrgeschwindigkeit des Transportsystems (1).

10. Verfahren gemäss einem der Ansprüche 8 oder 9, **dadurch gekennzeichnet, dass** basierend auf bereits erfassten Abstandsmesswerten mittels eines Gewichtungsmoduls (113) der Messvorrichtung (11) ein zulässiger Abstandsgrenzwertbereich generiert wird, wobei ein neu erfasster Abstandsmesswert nur zum Generieren des Steuersignals herangezogen wird, falls er ausserhalb des Abstandsgrenzwertbereichs liegt, um ein Befahren von Rampen zu ermöglichen.

11. Verfahren gemäss einem der Ansprüche 8 bis 10, **dadurch gekennzeichnet, dass** mittels eines Fahrwegmessmoduls (112) der Messvorrichtung (11) eine zurückgelegte Fahrstrecke s erfasst wird, wobei mittels der Messvorrichtung basierend auf dem Quotienten der Differenz aufeinanderfolgender Abstandsmesswerte und der erfassten Fahrstrecke s ein entsprechendes Steuersignal generiert und zur Steuervorrichtung (10) übertragen wird, falls die detektierte ansteigende und/oder abfallende Rampe nach Vergleich mit einem Referenzwert unzulässig ist.

## Claims

1. A transportation system (1) with an automatic control device (10), with a measuring device (11) for detecting measured distance values regarding the space between the measuring device (11) and a surface (9) that is to be traveled, and for transmitting a control signal that can be generated by the control device (10) based on the detected measured distance values, and with wheels (101) that can change the acceleration thereof and that can be steered and/or controlled, and which can be automatically controlled by the control device (10), **characterized**
**in that** the measuring device (11) is configured such that it compares measured distance values, which are detected in a local measuring range of the measuring device (11), with a distance limit value, such that, when this limit value is exceeded, a corresponding control signal for controlling the transportation device (1) is generated, wherein the measuring device (11) comprises a plurality of measuring modules (110) for detecting the measured distance values of a corresponding local measuring range, respectively, and which are disposed horizontally spaced relative to the wheels (101) on the underside of the transportation system, and/or a distance measurement is taken through an opening in the underside.

2. The transportation system (1) according to claim 1, **characterized in that**, using the measured distance values of depressions and/or elevations of the surface, which are adjacent relative to the wheels, a corresponding control signal can be generated.

3. The transportation system (1) according to any one of the claims 1 or 2, **characterized in that** the measuring device (11) comprises at least one distance measuring module (111) for detecting measured distance values of a distance measuring range (110) that is horizontally spaced relative to the surface (9), and a corresponding control signal can be generated based on these measured distance values.

4. The transportation system (1) according to any one of the claims 1 to 3, **characterized in that** each of the measuring modules (110) is embodied as an ultrasonic sensor or optical distance sensor, preferably a laser distance sensor, wherein the transportation system (1) preferably comprises two laser distance sensors as well as two ultrasonic sensors.

5. The transportation system (1) according to any one of the claims 1 to 4, **characterized in that** the control signal is configured as a delay signal and/or a steering signal for the purpose of avoiding a collision with neighboring objects or crashes on the surface (9), in order to thereby automatically keep the transportation system (1) away from a drop-off or steering it away from the same by means of the control device (10).

6. The transportation system (1) according to any one of the claims 1 to 5, **characterized in that** the measuring device (11) comprises the travel distance measuring module (112) for detecting a traversed travel distance, wherein the measuring device is further set up such that it generates, based on the quotient of the difference of consecutive measured distance values and the detected travel distance, a corresponding control signal, such that any allowable ascending and/or descending ramps can be detected.

7. The transportation system (1) according to any one of the claims 1 to 6, **characterized in that** the measuring device (11) is disposed on the transportation system (1) at a calibrated normal distance relative to the surface (9).

8. A method for automatically controlling a transportation system (1), wherein measured distance values regarding the space between the measuring device (11) and a surface (9) that is to be traveled are detected by means of a measuring device (11) of the transportation system (1), wherein a control signal that is generated based on the detected measured distance values is transmitted to the control device (10), **characterized in that**, using measuring modules (110) of the measuring device (11) in a respectively corresponding local measuring range of the measuring module (110), a distance measurement is taken from an underside of the transportation system (1) and the detected measured distance values are selectively compared to a distance limit value, wherein a corresponding control signal for controlling the transportation device (1) is generated, when the distance limit value is exceeded.

9. The method according to claim 8, **characterized in that** the local measuring range of the surface (9) that is to be measured through a distance between a steering or drive wheel of the transportation system (1) and the measuring point of the measuring range that is spaced at the greatest distance relative to the corresponding wheel is selected such that the time that is necessary for generating the control signal and for controlling the transportation system (1) is smaller than the quotient of said distance and the travel speed of the transportation system (1).

10. The method according to any one of the claims 8 or 9, **characterized in that**, based on previously detected measured distance values, a weighting module (113) of the measuring device (11) generates an allowable limit value distance range, wherein a newly detected measured distance value is only used for generating the control signal, when such a value is outside of the limit value distance range, to facilitate driving over ramps.

11. The method according to any one of the claims 8 to 10, **characterized in that** a traveled travel distance is recorded by means of a travel distance measuring module (112) of the measuring device (11), wherein a corresponding control signal is generated by way of the measuring device based on the quotient of the difference of consecutive measured distance values and the detected travel distance s, and the signal is transmitted to the control device (10), if the detected ascending and/or descending ramp is inadmissible after comparison with a reference value.

## Revendications

1. Système de transport (1) avec dispositif automatisé de commande (10), avec un dispositif de mesure (11) pour la saisie de valeurs de mesures d'intervalle concernant l'intervalle entre le dispositif de mesure (11) et une des surfaces à transporter (9) et pour le transfert d'un signal de commande pouvant être généré à partir des valeurs de mesure d'intervalle saisies vers le dispositif de commande (10) et avec des roues modifiables en termes d'accélération et orientables et/ou dirigeables, qui peuvent être commandées de façon automatisée grâce au dispositif de commande (10), **caractérisé en ce que**
le dispositif de mesure (11) est constitué de valeurs de mesure d'intervalle saisies dans un domaine local de mesure du dispositif de mesure (11) à fins de comparaison sélective avec une valeur limite d'intervalle et pour générer un signal de commande correspondant en cas de dépassement pour le contrôle du dispositif de transport (1), où le dispositif de mesure (11) comprend plusieurs modules de mesure (110) destinés à enregistrer des valeurs de mesure d'intervalle d'un domaine de mesure local correspondant, lesquels sont disposés horizontalement par rapport aux roues (101) sur la face inférieure du système de transport, ou resp. pour effectuer une mesure d'intervalle à partir d'une ouverture de la face inférieure.

2. Système de transport (1) selon la revendication 1, **caractérisé en ce qu'**un signal de commande correspondant peut être généré grâce aux valeurs de mesure d'intervalle depuis des renfoncements et/ou des saillies à côté des roues.

3. Système de transport (1) selon une des revendications 1 à 2 **caractérisé en ce que** le dispositif de mesure (11) comprend au moins un module de mesure de distance (111) pour enregistrer des valeurs de mesure de distance dans un domaine de distances (1110) horizontalement à la surface (9), sur la base desquelles mesures de distance on peut générer un signal de commande correspondant.

4. Système de transport (1) selon l'une des revendications 1 à 3, **caractérisé en ce que** chacun des modules de mesure (110) se compose d'un capteur par ultrasons ou d'un capteur optique d'intervalles, préférentiellement d'un capteur d'intervalles par laser, où le système de transport (1) comprend préférentiellement deux capteurs d'intervalles par laser ainsi que deux capteurs par ultrasons.

5. Système de transport (1) selon l'une des revendications 1 à 4, **caractérisé en ce que** le signal de commande, pour éviter les collisions avec les objets alentours ou pour éviter les pentes escarpées sur la surface (9), se compose d'un signal de ralentissement et/ou d'un signal de direction afin de tenir automatiquement le système de transport (1) à distance grâce au dispositif de commande (10) ou de l'éloigner d'une façon similaire.

6. Système de transport (1) selon l'une des revendications 1 à 5, **caractérisé en ce que** le dispositif de mesure (11) comprend un module de mesure de transport (112) pour enregistrer un trajet effectué, où le dispositif de mesure est équipé, en plus, pour générer un signal de commande correspondant sur la base du quotient des différences entre les valeurs de mesure d'intervalle et des trajets effectués, de façon que des rampes croissantes et/ou décroissantes licites soient détectables.

7. Système de transport (1) selon l'une des revendications 1 à 6, **caractérisé en ce que** le dispositif de mesure (11) est disposé dans un intervalle normal étalonné du système de transport (1) par rapport à la surface (9).

8. Procédé de commande automatisée d'un système de transport (1) où, au moyen d'un dispositif de mesure (11), sont enregistrées des valeurs d'intervalle concernant l'intervalle entre le dispositif de mesure (11) et l'une des surfaces parcourues (9), où est transmis un signal de commande au dispositif de commande (10) fondé sur les valeurs de mesure d'intervalle enregistrées, **caractérisé en ce que** grâce à des modules de mesure (110) du dispositif de mesure (11), une mesure d'intervalle est effectuée depuis la face inférieure du système de transport (1) dans un domaine de mesure local correspondant des modules de mesure (110), et des valeurs de mesure d'intervalle sont comparées sélectivement avec une valeur limite d'intervalle, suite à quoi, en cas de dépassement de cette limite, un signal de commande est généré pour commander le dispositif de transport (1).

9. Procédé selon la revendication 8, **caractérisé en ce que** le domaine de mesure local de la surface à mesurer (9) est choisi par une étendue entre une roue d'orientation ou d'entraînement du système de transport (1) et le point de mesure du domaine de mesure le plus éloigné de la roue correspondante, de façon que le temps nécessaire à la génération du signal de commande et à la commande du système de transport (1) soit plus faible que le quotient des étendues susmentionnées et de la vitesse de parcourt du système de transport (1).

10. Procédé selon l'une des revendications 8 ou 9 **caractérisé en ce qu'**un domaine licite de valeurs limites d'intervalle est généré sur la base des valeurs de mesure d'intervalle déjà enregistrées grâce à un module de pondération (113) du dispositif de mesure (11), suite à quoi une valeur de mesure d'intervalle nouvellement enregistrée n'est produite que pour générer le signal de commande s'il est hors du domaine de valeurs limites d'intervalle afin de permettre de parcourir des rampes.

11. Procédé selon l'une des revendications 8 à 10 **caractérisé en ce que** grâce à un module de mesure de parcourt (112) du dispositif de mesure (11), une étendue parcourue est enregistrée, suite à quoi, grâce au dispositif de mesure, un signal de commande est généré sur la base du quotient de la différence entre les valeurs de mesure d'intervalle et l'étendue enregistrée, et est transmis au dispositif de commande (10) si la rampe croissante et/ou décroissante détectée est illicite en comparaison d'une valeur de référence.
